(19) Europäisches Patentamt
European Patent Office
Office européen des brevets

(11) **EP 4 091 104 B1**

(12) **EUROPEAN PATENT SPECIFICATION**

(45) Date of publication and mention
of the grant of the patent:
**17.09.2025 Bulletin 2025/38**

(21) Application number: **20701406.9**

(22) Date of filing: **14.01.2020**

(51) International Patent Classification (IPC):
**G06N 3/00** *(2023.01)*        **G06N 3/04** *(2023.01)*
**G06N 3/08** *(2023.01)*

(52) Cooperative Patent Classification (CPC):
**G06N 3/08; G06N 3/045;** G06N 3/044

(86) International application number:
**PCT/EP2020/050839**

(87) International publication number:
**WO 2021/144007 (22.07.2021 Gazette 2021/29)**

(54) **DATA INTERPRETATION SYSTEM, VEHICLE, METHOD FOR INTERPRETING INPUT DATA, COMPUTER PROGRAM AND COMPUTER-READABLE MEDIUM**

DATENINTERPRETATIONSSYSTEM, FAHRZEUG, VERFAHREN ZUR INTERPRETATION VON EINGANGSDATEN, COMPUTERPROGRAMM UND COMPUTERLESBARES MEDIUM

SYSTÈME D'INTERPRÉTATION DE DONNÉES, VÉHICULE, PROCÉDÉ D'INTERPRÉTATION DE DONNÉES D'ENTRÉE, PROGRAMME INFORMATIQUE, ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.11.2022 Bulletin 2022/47**

(73) Proprietors:
• **Toyota Jidosha Kabushiki Kaisha**
  **Toyota-shi, Aichi-ken 471-8571 (JP)**
• **ETH Zurich - The Swiss Federal Institute of Technology Zurich**
  **8092 Zurich (CH)**
• **Katholieke Universiteit Leuven**
  **3000 Leuven (BE)**

(72) Inventors:
• **ABBELOOS, Wim**
  **1140 Brussels (BE)**
• **GEORGOULIS, Stamatios**
  **8092 Zurich (CH)**
• **VAN GOOL, Luc**
  **8092 Zurich (CH)**

• **VANDENHENDE, Simon**
  **3000 Leuven (BE)**

(74) Representative: **Cabinet Beau de Loménie**
  **103, rue de Grenelle**
  **75340 Paris Cedex 07 (FR)**

(56) References cited:
**US-A1- 2019 057 507**

• **XU DAN ET AL: "PAD-Net: Multi-tasks Guided Prediction-and-Distillation Network for Simultaneous Depth Estimation and Scene Parsing", 2018 IEEE/CVF CONFERENCE ON COMPUTER VISION AND PATTERN RECOGNITION, IEEE, 18 June 2018 (2018-06-18), pages 675 - 684, XP033476028, DOI: 10.1109/ CVPR.2018.00077**
• **YE LYU ET AL: "LIP: Learning Instance Propagation for Video Object Segmentation", ARXIV.ORG, CORNELL UNIVERSITY LIBRARY, 201 OLIN LIBRARY CORNELL UNIVERSITY ITHACA, NY 14853, 30 September 2019 (2019-09-30), XP081498371**

**Description**

FIELD OF THE DISCLOSURE

The present disclosure concerns the interpretation of data, in particular images, to perform different tasks in order to extract relevant information embedded in the data. Such relevant information can be for instance the presence of persons, objects, etc., in the image, a depth map of the image, etc.

BACKGROUND OF THE DISCLOSURE

Since the cost of cameras and other sensors has plummeted, a growing need has emerged to obtain more and more qualified information on the basis of initial data collected by the sensors, in particular by cameras.

However, extracting relevant information from images or other input data can be an extremely complex problem, which does not have yet a general solution.

Properly structured and properly trained neural networks have been extremely efficient in many cases to extract information.

However, there is still a need for systems and methods exhibiting high performances to extract information from various input data.

The references below disclose several systems and methods that have been developed to extract information from input data.

References:

[1] K.-K. Maninis, I. Radosavovic, and I. Kokkinos, "Attentive single-tasking of multiple tasks", IEEE Conference on Computer Vision and Pattern Recognition (CVPR), 2019

[2] D. Xu, W. Ouyang, X. Wang, and N. Sebe, "PAD-Net: Multi-tasks guided prediction-and-distillation network for simultaneous depth estimation and scene parsing", IEEE Conference on Computer Vision and Pattern Recognition (CVPR), 2018

[3] Z. Zhang, Z. Cui, C. Xu, Z. Jie, X. Li, and J. Yang, "Joint task-recursive learning for semantic segmentation and depth estimation", Springer European Conference on Computer Vision (ECCV), 2018

[4] Z. Zhang, Z. Cui, C. Xu, Y. Yan, N. Sebe, and J. Yang, "Pattern-affinitive propagation across depth, surface normal and semantic segmentation", IEEE Conference on Computer Vision and Pattern Recognition (CVPR) (2019)

[5] Tsun-Yi Lin, Piotr Doll "ar, Ross Girshick, Kaiming He, Bharath Hariharan, and Serge Belongie: "Feature pyramid networks for object detection". In CVPR, pages 2117-2125, 2017.

[6] Ke Sun, Bin Xiao, Dong Liu, and Jingdong Wang: "Deep high-resolution representation learning for human pose estimation". In CVPR, pages 5693-5703, 2019.

[7] Dan Xu, Wanli Ouyang, Xiaogang Wang, and Nicu Sebe: "Pad-net: Multi-tasks guided prediction-and-distillation network for simultaneous depth estimation and scene parsing". In CVPR, pages 675-684, 2018.

[8] Zhenyu Zhang, Zhen Cui, Chunyan Xu, Yan Yan, Nicu Sebe, and Jian Yang: "Pattern-affinitive propagation across depth, surface normal and semantic segmentation". In CVPR, pages 4106-4115, 2019.

[9] Jie Hu, Li Shen, and Gang Sun: "Squeeze-and-excitation networks". In CVPR, pages 7132-7141, 2018.

[10] Alexander Kirillov, Ross Girshick, Kaiming He, and Piotr Doll 'ar. Panoptic feature pyramid networks. In CVPR, pages 6399-6408, 2019.

[11] Kaiming He, Xiangyu Zhang, Shaoqing Ren, and Jian Sun: "Deep residual learning for image recognition". In CVPR, pages 770-778, 2016.

[12] Zhenyu Zhang, Zhen Cui, Chunyan Xu, Zequn Jie, Xiang Li, and Jian Yang: "Joint task-recursive learning for semantic segmentation and depth estimation". In ECCV, pages 235-251, 2018.

[13] US 2019/057507 El-Khamy Mostafa et al.

DISCLOSURE OF THE INVENTION

A first purpose of the present disclosure is to propose a data interpretation system capable of performing one or more tasks based on input data, and which has an improved performance as compared to the existing systems presented above.

To meet this purpose, according to the present disclosure a data interpretation system is proposed.

This data interpretation system comprises a neural network implemented by one or more computers for performing at least one data-based output task based on input data.

Accordingly, the neural network is configured to receive a datum of the input data that is an input image inputted to the system.

The neural network comprises a backbone capable of outputting representations of the datum at a plurality of scales, a plurality of task prediction units, each being capable of calculating a task feature for each of a plurality of inside tasks, a distillation unit, and at least two feature aggregation units.

The backbone is configured, based on said datum, to calculate a backbone feature for each scale among the plurality of scales.

The task prediction units are configured respectively, for each scale among said scales, based at least on the backbone feature at said scale, to calculate a task feature for each of said inside tasks.

The distillation unit is configured, based on the task features for each of said inside tasks and for each scale among said scales, to calculate an output feature for each of the at least one output task for each of said scales.

Said at least two feature aggregation unit are configured, for each of the at least one output task, to combine the output features calculated for the output task across the respective scales so as to yield a prediction for the output task as a depth map or a semantic image.

In other words, the feature aggregation unit(s) is/are configured, for each of the at least one output task, to calculate a prediction for the output task based on the output features calculated for the output task and for the respective scales.

Such prediction is an information datum obtained by performing the output task based, - indirectly -, on the datum inputted by the system.

In an embodiment, the data interpretation system further comprises at least one feature propagation unit. Said at least one feature propagation unit is configured to input source task features for each of the inside tasks calculated by a source task prediction unit, and on this basis, to calculate scaled predictions for each of the inside tasks, at a destination scale. In this embodiment, in addition, a destination task prediction unit (a task prediction unit distinct of the source task prediction unit) is configured, for calculating the task feature for each of said inside tasks at the destination scale, to input the backbone feature for the destination scale and the scaled predictions calculated at the destination scale.

In an embodiment, for each of said at least one feature propagation unit, the scale of the scaled prediction is higher than the scale of the backbone feature used by the source task prediction unit to calculate the source task feature.

In an embodiment, at least one for each of said at least one feature propagation unit comprises a channel gating mechanism, for instance a squeeze-and-excitation module (SEM).

In an embodiment, the datum is a multi-dimensional datum of dimension at least 2, and a scaling operation is an operation multiplying the number of data points on at least one dimension by a non-unity scale factor.

In an embodiment, said inside tasks include at least one inside task (hereinafter: an 'additional task') which is not an output task.

Such additional task(s) can improve the performance of the system for the output task(s).

In some embodiments, at least one additional task is a task which can be derived from one or more output task(s), that is, a task which consists of obtaining an output datum which can be obtained by calculation based on the result of one or more output task(s). For instance, surface normals maps can be derived from depth maps, and semantic boundaries can be derived from semantic segmentation.

Besides, the set of inside tasks preferably includes at least the set of output tasks.

In an embodiment, the backbone is an HRNet neural network, or an FPN neural network, in particular built on a ResNet.

The present disclosure therefore encompasses in particular a vehicle, comprising in this case at least one data interpretation system as defined above.

A second purpose of the present disclosure is to propose a method for interpreting input data in order to perform at least one data-based output task, capable of performing said at least one data-based output task with improved performances as compared to the existing methods presented above.

To meet this purpose, according to the present disclosure a method for interpreting input data in order to perform at least one data-based output task is proposed.

This method is defined in claim 11.

In an embodiment, the method further comprises a step (S35) of, based on source task features for each of the inside tasks calculated on the basis of a backbone feature at a source scale, calculating a scaled prediction for each of the inside tasks at a destination scale different of the source scale; and at step S30 the task features for each of said inside tasks at the destination scale are calculated based on both a backbone feature at the destination scale and the scaled predictions calculated at the destination scale. Preferably, the destination scale is higher than the source scale.

In an embodiment, said inside tasks include at least one inside task which is not an output task.

In a particular implementation, the proposed training method is determined by computer program instructions.

Accordingly, another purpose the present disclosure is to propose a computer program comprising instructions which, when the program is executed by a computer, cause the computer to carry out the steps of a method. The computer program is preferably stored on a non-transitory computer-readable storage media. The computer program may use any programming language, and be in the form of source code, object code, or code intermediate between source code and object code, such as in a partially compiled form, or in any other desirable form. The computer may be any data processing means, for instance a personal computer, an electronic control unit configured to be mounted in a vehicle, a smartphone, a laptop, etc.

The present disclosure also includes a non-transitory computer readable medium having the computer program stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk. Alternatively, the computer-readable medium may be an integrated circuit in which the program is incorporated, the circuit being adapted to execute or to be used in the execution of the control method in question.

The structure of the neural network forming the above-proposed data interpretation system has shown improved performances, in comparison with known state of the art systems. While the data interpretation system remains simple to train by end-to-end training, the use of task prediction units receiving backbone features at different scales, in order to perform inside tasks at these different scales, has appeared to be particularly efficient.

It has been further observed that the improvement of performance is particularly significant for dense prediction tasks, that is, for tasks which output data having height and width dimensions which are equal or at least proportional to the height and width dimensions of the input data. For this reason, in some embodiments one or more of the inside and output tasks (and preferably all of them) is a dense prediction task.

The use of feature propagation unit(s), to propagate information from one scale to another (in particular from lower scales to higher scales), has also permitted a further gain of performances for performing the output tasks.

Generally, at least one and more preferably all output task(s) is/are also inside tasks.

BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which :

Fig.1 is a schematic representation of a data interpretation system according to the present disclosure;
Fig.2 is a schematic representation of a Feature Propagation Unit of the data interpretation system of Fig.1;
Fig.3 is a schematic representation, in top view, of a vehicle comprising the data interpretation system of Fig.;
Fig.4 is a schematic representation of a squeeze and excitation module which is part of the data interpretation system of Fig.1; and
Fig.5 is a block diagram showing the steps of a method for interpreting input data according to the present disclosure.

DESCRIPTION OF PREFERRED EMBODIMENTS

A data interpretation system 1000 according to the present disclosure will now be presented. Data interpretation system 1000 has been designed to perform multiple data interpretation tasks. In the present case, system 1000 is a neural network designed, based on images inputted by neural network 1000, to output both depth maps DM of the scene shown in the images, and a semantic representation or semantic image SI of this scene.

Accordingly, the output tasks of system 1000, which are also inside tasks of this system, are depth map calculation (task T1) and semantic image calculation (task T2). As will be explained below, system 1000 also carries out two additional tasks, as inside tasks: surface normal estimation (task T3) and edge detection (task T4). Edge detection (task T4) is actually a semantic boundary detection, rather than a typical edge detection as well known in machine vision.

Architecture and operation of system 1000

The data interpretation system 1000 is formed by a neural network 1000 implemented by one or more computers. System 1000 is configured to carry out one or a plurality of output tasks based on an input image I.

In the present embodiment, system 1000 is configured to perform two output tasks, so as to output a depth map image DM, and a semantic image SI, based on an input image I inputted to system 1000.

Although the exemplary embodiment disclosed here uses images as input data, the present disclosure is not limited to such input data. For this reason, the expression 'input image' used hereinafter can be replaced by 'input datum', the input datum being input data of any nature that can be used with a data interpretation system according to the present disclosure. Such input datum can be in particular a video input, or more generally multi-sensor input data that correlates well with vision (e.g. point clouds, depth maps, etc., including in particular any data of the shape C x H x W, where C represents one or more channels, H and W are a height and a width, as seen from a point of view).

Also, although in this exemplary embodiment, the data interpretation system outputs depth map images and semantic images, the present disclosure is not limited to such output data (or tasks). The present disclosure can be applied to data interpretation systems capable of outputting output data, and to perform output tasks of any nature, depending on the information that can be extracted from the input data. For this reason, the different inside or outside tasks mentioned hereinafter (such as depth map extraction, semantic image extraction, etc.) can be replaced by any other tasks.

To perform its tasks, system 1000 comprises different functional units: a backbone B, four task prediction units TPU1-TPU4; three feature propagation units FPU1-FPU-3; a distillation unit DU; and two feature aggregation units FAU1,FAU2.

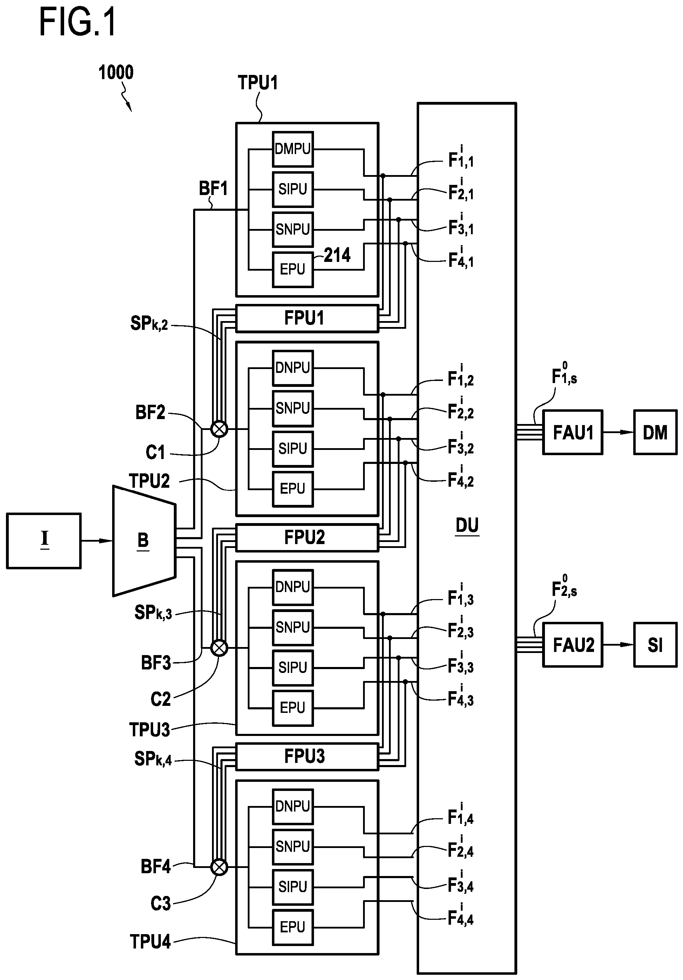

The complete architecture of system 1000 is shown by Fig.1.

The following notations are used hereinafter:

I Inputted image, on which depth map and semantic image are to be determined; image I is of the shape $C \times H \times W$, where C represents the number of channels in the image, H represents the number of pixels in a column (height), W represents the number of pixels in a line (width). Each channel here is a variable which can have multiple dimensions, as the case may be. For instance, an RGB image I might comprise three channels R,G,B.

BF1-BF4 Backbone features, having different scales S1-S4 respectively.

$F^i_{k,s}$: Task feature outputted by the task prediction unit TPUs and inputted by the distillation unit DU, for scale Ss and task Tk;

$SP_{k,s}$: Scaled Prediction for scale Ss and task Tk, outputted by the feature propagation unit FPUs.

$F^o_{k,s}$ task feature outputted by the distillation unit DU, for scale Ss and task Tk;

DM Depth map image outputted by the feature aggregation unit FAU.

SI Semantic image outputted by the feature aggregation unit FAU.

The system 1000 is configured to process data in successive calculation cycles or loops. At each of these cycles, the system 1000 is configured to input an input image I, and to output a depth map DM and a semantic image SI for this image.

More precisely, at each of these cycles an input image I is inputted into the backbone B. Based on this image, backbone B then outputs backbone features BFi (one for each scale). The backbone features BFi are processed by the respective task prediction units TPUi (actually, additional interaction also takes place in this process, thanks to the feature propagation units FPUi, as will be explained below). The task features $F^i_{k,s}$ outputted by the task prediction unit are transmitted to the distillation unit DU. Based on these task features $F^i_{k,s}$, the distillation unit DU outputs output task features $F^o_{k,s}$ for each output task and each of the scales Ss. The output task features $F^o_{k,s}$ are transmitted to the feature aggregation units, respectively for each output task, in order to obtain the desired depth map DM and semantic image SI for the input image I.

The structure and functioning of the various units of system 1000 will now be described.

Backbone B

Backbone B is a neural network configured to extract backbone features BFi at multiple scales S1-S4 from an input image I. Backbones capable of multi-scale feature extraction are known per se, and have been used in semantic segmentation, object detection, pose estimation, etc.

Accordingly, as a backbone for the data interpretation system, any existing neural network suitable for inputting input data under the desired format, and outputting representations of the input data at a plurality of scales can be used.

For instance, a backbone such as an FPN proposed by publication 5 or an HRNet proposed by publication 6 can be used. A ResNet is an example of a neural network that can be used to implement the FPN.

In the present case, the input datum inputted to the backbone B is an image I of a scene. The image has H lines and W columns.

The backbone B is configured to scale down the image I to produce backbone features scaled respectively at scales 1/32, 1/16, 1/8 and 1/4. This means that each of the backbone features BFi has width and height dimensions which are obtained by applying a factor 1/32, 1/16, 1/8 and 1/4 respectively to the number of columns and the number of lines of the input image I.

Initial tasks prediction units TPU1-TPU4

The initial task prediction units TPUi (i=1..4) are neural networks configured, based respectively on the backbone features BFs at multiple scales Ss outputted by the backbone B, to output per-task features or 'task features' $F^i_{k,s}$. That is, each initial task prediction unit TPUs predicts a task feature $F^i_{k,s}$ for every inside task Tk, and at each scale Ss.

In this purpose, an initial task prediction unit TPUs generally comprises a sub-neural network for each task (each inside task) is has to perform.

In the present exemplary embodiment, each initial task preduction unit TPUs thus comprises four task sub-networks: a depth map prediction unit DMPU, a semantic image prediction unit SIPU, a surface normals prediction unit SNPU, and an edge prediction unit EPU.

The task features outputted by the respective task sub-networks DPMU, SNPU, SIPU and EPU for each of the task prediction units TPUi constitute collectively a per-task representation of the scene at multiple scales. Not only does this add deep supervision to the network, but the per-task representations can therefore be distilled at each scale separately. This makes it possible to have multiple task interactions, each modeled within a specific receptive field.

Feature propagation units FPU1-FPU3

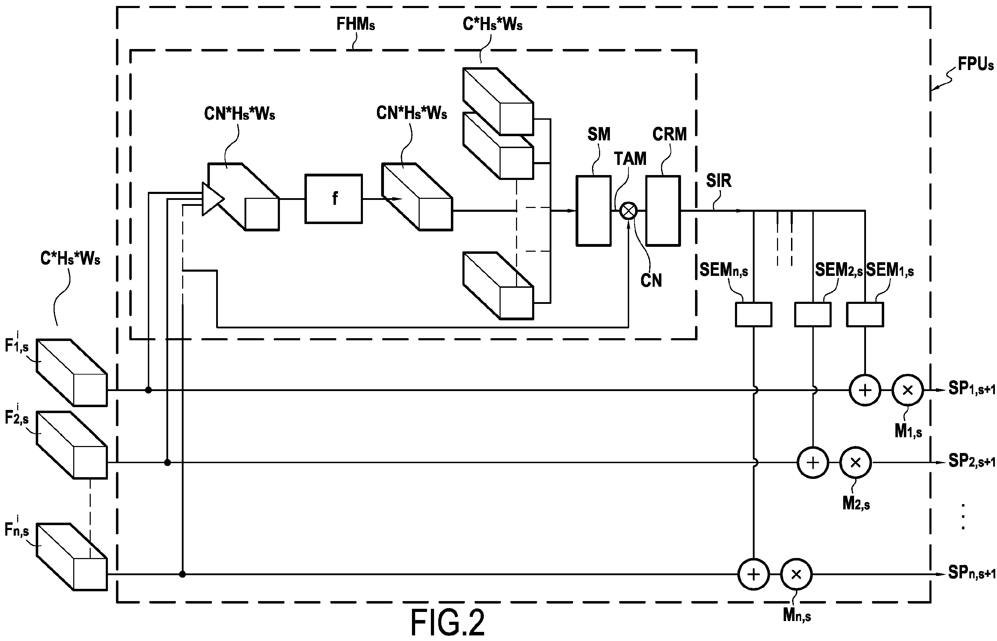

In order to share the information between different scales, system 1000 comprises three feature propagation units FPUs (s=1,2,3). On Fig.2, a generic feature propagation units FPUs for a generic number n of inside tasks Tk is shown.

Each of the feature propagation units is a neural network configured to input a task feature $F^i_{k,s}$ outputted by a source task predition unit, - respectively units TPU1, TPU2 and TPU3, and to output scaled predictions, - respectively SPk,2, SPk,3 and SPk,4, having a scale $S_{s+1}$ adapted to the respective destination task prediction units TPU2, TPU3 and TPU4.

In order to make this information exchange possible across scales, upstream each destination task prediction unit TPU2, TPU3 and TPU4, system 1000 comprises concatenation nodes (nodes C1,C2,C3). Each of these concatenation nodes Cs concatenates the backbone feature BFs+1 at a scale Ss+1 ('destination scale' Ss+1, with s=1,2,3) for the destination task prediction unit concerned TPU2,TPU3,TPU4 with the scaled prediction $SP_{k,s+1}$ outputted by the Feature Propagation Unit FPUs, the scaled prediction $SP_{k,s+1}$ being based on the task features $F^i_{k,s}$ outputted by the source task prediction unit TPUs for the respective inside tasks Tk, at scale Ss.

By this mechanism, for each of scales Ss+1, with i=1,2,3, the backbone feature BFs+1 for the scale Ss+1 is complemented with the scaled predictions $SP_{k,s+1}$ which incorporates information passed from the preceding lower scale Ss.

Accordingly, in a calculation cycle in which a certain input image I is inputted to the backbone B, the following calculations are carried out:

First, the backbone features BF1-BF4 at the lowest scale S1 (S1=1/32) are calculated by the backbone B based on said image.

The task prediction unit TPU1 then calculates task features $F^i_{1,1}$, $F^i_{2,1}$, $F^i_{3,1}$, and $F^i_{4,1}$ for the respective inside tasks T1-T4 and scale S1. These features are transmitted both to the distillation unit DU and to the first feature propagation unit FP1.

Based on features $F^i_{1,1}$, $F^i_{2,1}$, $F^i_{3,1}$, and $F^i_{4,1}$, the first feature propagation unit FP1 calculates scaled predictions $SP_{k,2}$. The scaled predictions are calculated at the proper scale for being inputted into the second task prediction unit TPU2, that is scale S2 (1/16), which is also the scale of backbone feature BF2.

The concatenation node C1 concatenates the scaled predictions $SP_{k,2}$ and the backbone feature BF2 and transmits the result of this concatenation to the second task prediction unit TPU2.

Always in the same calculation cycle, the task prediction unit TPU2 then calculates task features $F^i_{1,2}$, $F^i_{2,2}$, $F^i_{3,2}$, and $F^i_{4,2}$ for the respective inside tasks T1-T4 at scale S2. These features are transmitted to the distillation unit DU, and to the second feature propagation unit FP2 to calculate the scaled predictions $SP_{k,3}$.

The above calculations are repeated, mutatis mutandis, to calculate task features $F^i_{1,3}$, $F^i_{2,3}$, $F^i_{3,3}$, and $F^i_{4,3}$, and then task features $F^i_{1,4}$, $F^i_{2,4}$, $F^i_{3,4}$, and $F^i_{4,4}$.

All these calculations are performed in the same calculation cycle, that is, based on the same inputted image I.

Consequently, the information calculated by the task prediction units TPU1,TPU2,TPU3 at a lower scale is used to improve the calculation of the task features calculated at a higher scale by the task prediction units TPU2,TPU3,TPU4.

Note that the feature propagation units FPUs and the concatenation nodes Cs are not necessary to implement the proposed method. The proposed method can also be implemented in such a way that only the backbone features BFs (s=1..4) are inputted to the respective Task Prediction Units TPUs, without concatenating any scaled predictions SPk,s to a backbone feature upstream of a Task Prediction Units TPUs.

There are multiple solutions to implement a feature propagation unit FPU.

A first solution is to simply use a neural network configured to upsample the task features $F^i_{k,s}$ outputted by the source task prediction unit, so as to ouput a scaled prediction having a scale adapted to the destination task prediction unit TPU.

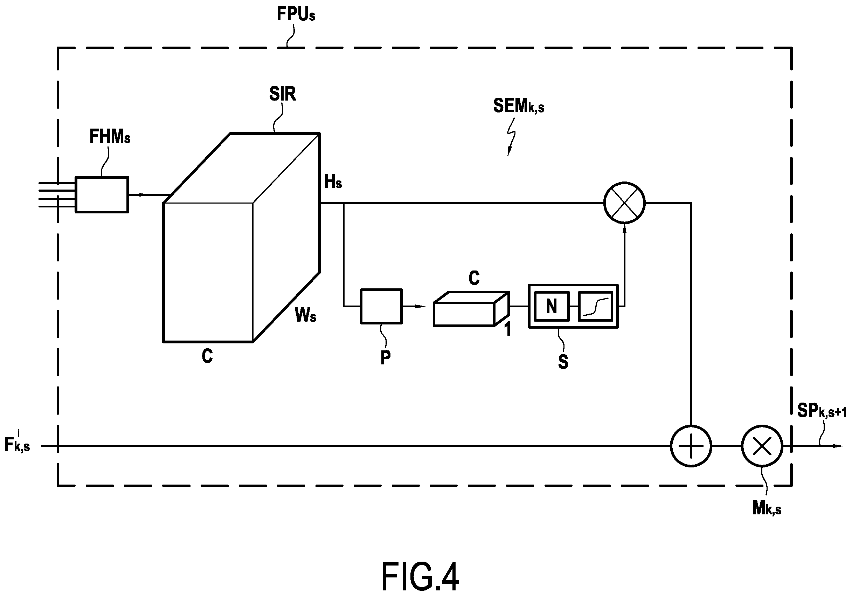

Another proposed structure for the FPUs is a neural network shown in detail on Figs.2 and 4.

The feature propagation unit FPUs (for scale Ss) shown on these figures comprises essentially a feature harmonization module FHMs (shown in detail on Fig.2) and four squeeze-and-excitation module SEMk,s (shown in detail on Fig.4), which will be described below. Please note that while on Fig.2, all tasks Tk for k=1...n are represented, while on Fig.4, only one task Tk, and in particular only the squeeze-and-excitation module SEMk,s for this task Tk, are represented.

Feature harmonization module

In the feature harmonization module FHMs, the different task features $F^i_{k,s}$ calculated by the source task prediction unit TPUs for a lower scale Ss (source scale) are concatenated and mapped to yield a shared representation SIR.

The feature harmonization module FHMs receives as input N task features $F^i_{k,s}$ for the N inside tasks Tk (k=1...n). Each feature $F^i_{k,s}$ is of the shape $C \times H_s \times W_s$, with $H_s$ and $W_s$ being the initial height H and width W of the input image I, scaled down to scale Ss.

The feature harmonization module FHMs combines the received features to a shared representation as follows: First, the N task features $F^i_{k,s}$ are concatenated and then processed by a neural network executing a learnable non-linear function "f".

To implement the non-linear function f, for instance the two basic residual blocks defined in publication 11 can be used.

More generally, the non-linear function f can be implemented by any neural network that takes as input features of size C x Hs x Ws and returns output of the same shape C x Hs x Ws. The choice for residual blocks in the present embodiment is made because it is a common building block which helps to stabilize training because of its structure.

The output of function f is split into N chunks along the channel dimension, that match the original number of channels C.

A softmax function is then applied in a softmax layer SM along the task dimension to generate a task attention mask. This operation is done is the same manner as the task balancing modules used in publication 12, although it is performed here to support multiple tasks.

The task attention masks TAM outputted by the softmax layer SM are then concatenated with each other in a concatenation node CN.

Finally, the result of the concatenation is further processed in a channel reduction module CRM to reduce the number of channels from N · C to C. The output is a shared image representation SIR, having only C channels. The channel reduction module CRM is implemented using a learnable convolutional layer with kernel size 1.

Squeeze-And-Excitation module SEM

The shared image representation SIR outputted by the feature harmonization module FHM is then refined by passing through a channel gating mechanism (more precisely, through one channel gating mechanism for each inside task). In the present exemplary embodiment, squeeze-and-excitation modules are used as channel gating mechanisms.

A channel gating mechanism is a functional unit that outputs a per channel scalar that lies between 0 and 1, and multiplies the scalar with the corresponding channels. This has as effect that some of the channels are suppressed, or masked out. Consequently, during training the neural net learns to mask out information from the shared image representation that is not relevant.

For instance, if the features being processed have a shape of B x H x W, the neural network will first output B scalars between 0 and 1. Then for every channel, the values in the matrix of size H x W will be multiplied with the corresponding scalar.

While the use of a shared representation might degrade performance when tasks are unrelated, this situation is avoided by applying a per-task channel gating function to the shared representation. This effectively allows each task to select the relevant features from the shared representation. The channel gating mechanism, implemented as a squeeze-and-excitation module SEM, is used to extract information from the shared representation in order to refine the individual task features. A SEM module can be implemented for instance on the basis of publication 9.

In the present embodiment, the squeeze-and-excitation module SEM comprises two modules (Fig.4).

The shared image representation SIR is first inputted to a pooling layer P, which downsamples the shared image representation SIR to yield a representation of dimension C x 1 x 1. The pooling layer P can be for instance a single convolutional layer of kernel size 1.

The layer P is implemented as follows.

The shared image representation SIR, of shape C x Hs x Ws (for a scale Ss) is inputted. A 2D average pooling is applied to the shared image representation SIR, which reduces its shape to C x 1 x 1. The output is then processed through a neural network S that consists of 2 linear layers (N) followed by a sigmoid layer. The representation of size C x 1 x 1 that comes out of the sigmoid is then multiplied channel wise with the original shared image representation SIR.

Each Squeeze-And-Excitation block SEMk,s thus includes learnable parameters, at least in the linear layers of neural network S. Therefore, each of the scaled predictions SPk,s+1 is obtained by applying a task-specific SEMk,s to the shared image representation SIR. Consequently, since every squeeze-and-excitation module SEMk,s contains learnable parameters, every scaled prediction SPk,s has the opportunity to select/mask out irrelevant information from the shared image representation SIR.

Final combination modules

The result of the channel-wise multiplication outputted by the Squeeze-And-Excitation block SEMk,s is then added to the task features $F^i_{k,s}$ for task Tk, at scale Ss.
The result is then upsampled from scale Ss to scale Ss+1 by a upscaling module Mk,s, which yields the scaled predictionS SPk,s+1.
As shown by Fig.1, the respective scaled predictions SPk,s+1 for the different tasks Tk, at each scale Ss+1, outputted by the feature propagation units FPUs are then concatenated in concatenation nodes Cs with the backbone feature $BF_{s+1}$ (for scale Ss+1), in order to feed the respective task prediction units TPUs+1.

Distillation unit DU

The distillation unit DU is a convolutional neural network configured to perform multi-scale, multi-modal distillation. The distillation unit outputs features only for the tasks which are really to be calculated: the output tasks Tk.
In the distillation unit, the task features $F^i_{k,s}$ are distilled together so as to perform multi-modal distillation at multiple scales. A spatial attention mechanism is used to fuse each task's features with information from other tasks. Specifically, the output features $F^o_{ks}$ for task $T_k$ at scale s are calculated as:

$$ F^o_{k,s} = F^i_{k,s} + \sum_{l \neq k} \sigma \left( W_{k,l,s} F^i_{l,s} \right) \odot \left( F^i_{l,s} \right) $$

where:

'i' for a task feature $F^i_{l,s}$ means the task feature inputted to the distillation unit DU while 'o' for a task feature $F^o_{l,s}$ means the task feature outputted by the distillation unit DU;
'k' is the index for the output task(s);
'l' is the index for the inside tasks;
's' is the index for the scales;
$\sigma(W_{k,l,s}, F^i_{ls})$ returns a spatial attention mask that is applied to the features $F^i_{l,s}$ from task $T_l$ at scale s;
$\odot$ represents the Hadamard product (element-wise multiplication);

$W_{k,l,s}$ are the convolutional layer's filter weights which, for a task Tk, are applied to the input feature $F^i_{l,s}$; and the function $\sigma(W_{k,l,s}, F^i_{ls})$ is the sigmoid function used to normalize the attention map.
The weights $W_{k,l,s}$ of the convolutional layers are determined when the system 1000 is trained.
In the present embodiment, on the basis of the above equation, the task features $F^o_{1,1}$ - $F^o_{1,4}$ and $F^o_{2,1}$ - $F^o_{2,4}$ are calculated respectively for the first output task (depth map calculation T1) and the second one (semantic image calculation T2).
The distillation unit can be implemented for instance based on publications 7 and 8, for the features which are not multi-scale dependent.
The distillation unit is implemented on the basis of the above formula. In this exemplary embodiment, the distillation unit DU comprises a convolutional layer (defined by weights $W_{k,l,s}$) with a kernel of size 3. A sigmoid function is applied to the output of the convolution layer, to yield a final output comprised between 0 and 1.
In this embodiment, the $W_{k,l,s}$ weights are parameters of a trainable convolutional layer. Accordingly, they are set to an initial value and then optimized by training.
Note that, the calculation of the outputs of the distillation unit DU is not necessarily limited to the use of spatial attention; any type of feature distillation can be used, such as squeeze-and-excitation blocks. Through repetition, a refined feature representation is calculated for every task at every scale. As the bulk of filter operations is performed on low resolution feature maps, the computational overhead is limited.

Feature Aggregation Units FAU1-FAU2

The task features $F^o_{1,1}$-$F^o_{1,4}$ and $F^o_{2,1}$-$F^o_{2,4}$ calculated by the distillation unit DU are transmitted respectively to the first and second feature aggregation units FAU1 and FAU2. The explanation below is given for the first feature aggregation unit FAU1, but can be transposed to the second one FAU2.

The aggregation unit FAU1 is a neural network configured, on the basis of the task features $F^o_{1,1}$-$F^o_{1,4}$ for the different scales S1-S4, to output a final prediction for the first output task T1, i.e. depth map determination. In this purpose, the aggregation unit FAU1 comprises an upsampling block, and an output task calculation block. The upsampling block calculates upsampled features (for instance, by performing bilinear upsampling), at the highest scale, for each of the task features $F^o_{1,1}$-$F^o_{1,4}$. It outputs upsampled features to the output task calculation block. The output task calculation block is a convolutional neural network which, based on the upsampled features, outputs the expected output information, in the present case a depth map DM.

In an embodiment in which the backbone of the system is an HRNet, the upsampling block can be configured to apply bilinear upsampling to bring the features to the scale of the input data. The output task calculation block can be configured to concatenate the features obtained by this operation and to decode them using two convolutional layers.

In an embodiment in which the backbone of the system is an FPN, the upsampling block and the output task calculation block can be configured as a 'panoptic feature pyramid network' as proposed by publication 10, in order to perform the output task based on the upscaled features outputted by the upsampling block.

TRAINING

For training the system 1000, a loss function is determined for every task. That is, a loss function is determined for each of the output tasks, and for each of the inside tasks, at every scale. All the losses of these loss functions are summed together to yield a global loss. The global loss is used to apply the backpropagation algorithm to determine the weights of the different neural networks, as known per se.

For each of the tasks, any loss function appropriate to train a neural network configured to perform the task can be used. For instance, for the output tasks of system 1000, any loss function based on differences between the images effectively outputted by one of the Feature Aggregation Units FAU1 and FAU2 and images ideally expected from that Feature Aggregation Unit (as ground truth) can be used.

The system 1000 can be trained by end-to-end training.

As an alternative, the training can be done in two-steps:

- The Initial Task Prediction Units TPU1-TPU4 can be trained separately.
- Then, the whole system 1000 is trained.

Method for interpreting input data

A method for interpreting input data in order to perform at least one data-based output task in accordance with the present disclosure will now be described.

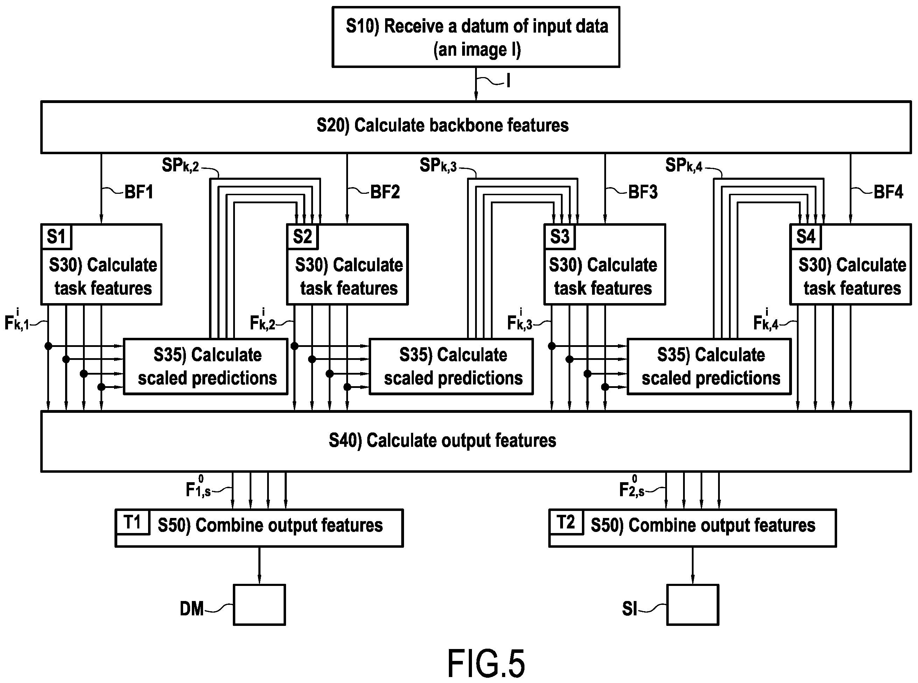

The method comprises the steps shown on Fig.5:

S10) A datum of input data is received. The input data, in the exemplary embodiment, is an image I acquired by a camera.

S20) based on image I, backbone features Bfi are calculated. The backbone features BFi are calculated for each one of scales S1-S4, based on image I.

S30) for each scale S1-S4:

Based on the backbone feature BFs at the considered scale Ss, task features $F^i_{k,s}$ are calculated progressively for the inside tasks T1, T2, T3 and T4.

In order to perform this calculation, once task features $F^i_{k,s}$ have been calculated for a scale Ss (s=1,2,3), scaled predictions SP1-SP3 are calculated (step S35) based on these task features $F^i_{k,s}$ by the feature propagation unit FPUs (s=1,2,3). Consequently, for each one Ss of scales S1-S3, scaled predictions $SP_{k,s}$ are successively calculated for each one Tk of the inside tasks T1-T4.

Consequently, the task feature $F^i_{k,s}$ are calculated for each of the inside tasks T1-T4 not only based on the backbone feature BFs, but also on the scaled predictions SPs at the considered scale Ss.

S40) based on the task features ($F^i_{k,s}$) for each of said inside tasks (T1-T4) and for each scale (Ss) among said scales, output features $F^o_{k,s}$ are calculated for each of the output taskq T and T2, for each of scales S1-S4.

S50) Finally, for each of the the output task T1 and T2, the output features $F^o_{k,s}$ are combined across the respective scales S1-S4 so as to yield a prediction (a depth map DM, and a semantic image SI respectively) for the output tasks T1 and T2.

Exemplary Computerized System

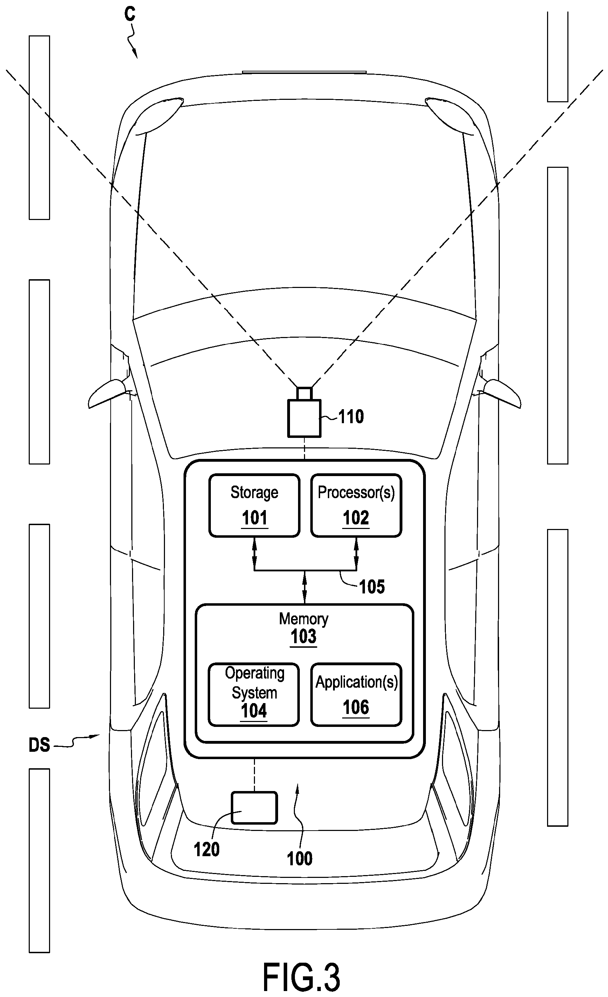

Figure 3 shows a car C (an example of a vehicle) equipped with an automated driving system DS. The automated driving system DS comprises the above-described data interpretation system 1000 as an exemplary computerized system or data-processing apparatus on which the present disclosure may be implemented in whole or in part.

The data interpretation system 1000 comprises several sensor units, including in particular a forward-facing camera 110. Camera 110 is mounted slightly above the windshield of the car on a non-shown mount.

The data interpretation system 1000 includes a computer system 100 which comprises a storage 101, one or more processor(s) 102, a memory 103, an operating system 104 and a communication infrastructure 105.

The computer system 100, in particular in its memory 103, stores instructions which when executed by the one or more processor(s) 102 cause the one or more processor(s) 102 to implement the different units of system 1000.

The one or more processors 102 are intended to be representative of the presence of any one or more processors or processing devices, of any of a variety of forms. For example, the processor(s) 102 is intended to be representative of any one or more of a microprocessor, a central processing unit (CPU), a controller, a microcontroller unit, an application-specific integrated circuit (ASIC), an application-specific instruction-set processor (ASIP), a graphics processing unit (GPU), a digital signal processor (DSP), a field programmable gate array (FPGA), a programmable logic device (PLD), a physics processing unit (PPU), a reduced instruction-set computer (RISC), or the like, or any combination thereof. The processor(s) 102 can be configured to execute program instructions including, for example, instructions provided via software, firmware, operating systems, applications, or programs, and can be configured for performing any of a variety of processing, computational, control, or monitoring functions.

The communication infrastructure 105 is a data bus to which all the above-mentioned sensor units are connected, and therefore through which the signals outputted by these sensor units are transmitted to the other components of system 100.

The storage 101, the processor(s) 102, the memory 103, and the operating system 104 are communicatively coupled over the communication infrastructure 105. The operating system 104 may interact with other components to control one or more applications 106. All components of the data interpretation system 1000 are shared or possibly shared with other units of the automated driving system DS or of car C.

A computer program to perform object detection according to the present disclosure is stored in memory 103. This program, and the memory 103, are examples respectively of a computer program and a computer-readable recording medium pursuant to the present disclosure.

The memory 103 of the computer system 100 indeed constitutes a recording medium according to the invention, readable by the one or more processor(s) 102 and on which said program is recorded.

The systems and methods described herein can be implemented in software or hardware or any combination thereof. The systems and methods described herein can be implemented using one or more computing devices which may or may not be physically or logically separate from each other.

The systems and methods described herein may be implemented using a combination of any of hardware, firmware and/or software. The present systems and methods described herein (or any part(s) or function(s) thereof) may be implemented using hardware, software, firmware, or a combination thereof and may be implemented in one or more computer systems or other processing systems.

In one or more embodiments, the present embodiments are embodied in machine-executable instructions. The instructions can be used to cause a processing device, for example a general-purpose or special-purpose processor, which is programmed with the instructions, to perform the steps of the present disclosure. Alternatively, the steps of the present disclosure can be performed by specific hardware components that contain hardwired logic for performing the steps, or by any combination of programmed computer components and custom hardware components. For example, the present disclosure can be provided as a computer program product, as outlined above. In this environment, the embodiments can include a machine-readable medium having instructions stored on it. The instructions can be used to program any processor or processors (or other electronic devices) to perform a process or method according to the present exemplary embodiments. In addition, the present disclosure can also be downloaded and stored on a computer program product. Here, the program can be transferred from a remote computer (e.g., a server) to a requesting computer (e.g., a client) by way of data signals embodied in a carrier wave or other propagation medium via a communication link (e.g., a modem or network connection) and ultimately such signals may be stored on the computer systems for subsequent execution.

The methods can be implemented in a computer program product accessible from a computer-usable or computer-readable storage medium that provides program code for use by or in connection with a computer or any instruction execution system. A computer-usable or computer-readable storage medium can be any apparatus that can contain or store the program for use by or in connection with the computer or instruction execution system, apparatus, or device.

A data processing system suitable for storing and/or executing the corresponding program code can include at least one processor coupled directly or indirectly to computerized data storage devices such as memory elements.

The systems and methods described herein can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network.

The terms "computer program medium" and "computer readable medium" may be used to generally refer to media such as but not limited to removable storage drive, a hard disk installed in hard disk drive. These computer program products may provide software to computer system. The systems and methods described herein may be directed to such computer program products.

All the neural networks mentioned herein are artificial neural networks formed from one or more processors (e.g., microprocessors, integrated circuits, field programmable gate arrays, or the like). These neural networks are divided into two or more layers, which comprise an input layer that may for instance receive images, an output layer that may for instance output an image or loss function (e.g., error, as described below), and one or more intermediate layers. The layers of the neural networks represent different groups or sets of artificial neurons, which can represent different functions performed by the processors on the data to calculate modified data.

Although the present disclosure herein has been described with reference to a particular embodiment, it is to be understood that this embodiment is merely illustrative of the principles and applications of the present disclosure.

**Claims**

1.  A data interpretation system comprising a neural network (1000) implemented by one or more computers for performing at least one data-based output task based on input data that is an input image inputted to the system, wherein

    the neural network (1000) is configured to receive a datum of the input data (I);
    the neural network (1000) comprises:

    - a backbone (B) capable of outputting representations of the datum at a plurality of scales;
    - a plurality of task prediction units (TPUi), each being capable of calculating a task feature for each of a plurality of inside tasks;
    - a distillation unit (DU); and
    - at least two feature aggregation units (FAUi);

    the backbone is configured, based on said datum, to calculate a backbone feature for each scale among the plurality of scales (Si);
    the task prediction units (TPUs) are configured respectively, for each scale (Ss) among said scales, based at least on the backbone feature (BFs) at said scale (Ss), to calculate a task feature ($F^i_{k,s}$) for each of said inside tasks (Tk);
    the distillation unit (DU) is configured, based on the task features ($F^i_{k,s}$) for each of said inside tasks and for each scale (Ss) among said scales, to calculate an output feature ($F^o_{k,s}$) for each of the at least one output task (T1,T2) for each of said scales; and
    said at least two feature aggregation units are configured, for each of the at least one output task (T1,T2), to combine the output features ($F^o_{k,s}$) calculated for the output task across the respective scales (Ss) so as to yield a prediction as a depth map (DM) or a semantic image (SI) for the output task (T1,T2).

2.  The data interpretation system according to claim 1, further comprising at least one feature propagation unit (FPU1,FPU2,FPU3); wherein

    said at least one feature propagation unit is configured to input source task features ($F^i_{k,s}$) for each of the inside tasks calculated by a source task prediction unit (TPU1,TPU2,TPU3), and on this basis, to calculate scaled predictions ($SP_{k,2};SP_{k,3},SP_{k,4}$) for each of the inside tasks, at a destination scale (Ss+1); and
    a destination task prediction unit (TPU2,TPU3,TPU4) distinct of the source task prediction unit is configured, for calculating the task feature ($F^i_{k,s+1}$) for each of said inside tasks (Tk) at the destination scale (Ss+1), to input the backbone feature (BFs) for the destination scale and the scaled predictions ($SP_{k,2};SP_{k,3},SP_{k,4}$) calculated at the destination scale.

3.  The data interpretation system according to claim 2, wherein for each of said at least one feature propagation unit, the scale of the scaled prediction (SP1,SP2,SP3) is higher than the scale of the backbone feature (BF1,BF2,BF3) used by the source task prediction unit (TPU1,TPU2,TPU3) to calculate the source task feature ($F^i_{k,s}$).

4. The data interpretation system according to any one of claims 1 to 3, wherein at least one for each of said at least one feature propagation unit (FPUi) comprises a channel gating mechanism, for instance a squeeze-and-excitation module (SEM).

5. The data interpretation system according to any one of claims 1 to 4, wherein the datum is a multi-dimensional datum of dimension at least 2, and a scaling operation is an operation multiplying the number of data points on at least one dimension by a non-unity scale factor (S).

6. The data interpretation system according to any one of claims 1 to 5, wherein said inside tasks include at least one inside task (T3,T4) which is not an output task.

7. The data interpretation system according to any one of claims 1 to 6, wherein the backbone (B) is an HRNet neural network, or an FPN neural network, in particular built on a ResNet.

8. The data interpretation system according to any one of claims 1 to 7, wherein at least one inside task is a task which is not an output task and which consists of obtaining an output datum which can be obtained by calculation based on the result of one or more output task(s).

9. The data interpretation system according to any one of claims 1 to 8, wherein one or more of the inside and output tasks is a dense prediction task.

10. A vehicle, comprising a data interpretation system according to any one of claims 1 to 9.

11. A method for interpreting input data in order to perform at least one data-based output task, the method comprising:

   S10) receiving a datum of input data (I) that is an input image;
   S20) based on said datum, calculating a backbone feature (BFi) for each scale among a plurality of scales (Si) of representations of the datum;
   S30) for each scale (Ss) among said scales:

   based at least on the backbone feature (BFs) at said scale (Ss), calculating a task feature ($F^i_{k,l}$) for each of said inside tasks (T1-T4);
   S40) based on the task features ($F^i_{k,s}$) for each of said inside tasks (T1-T4) and for each scale (Ss) among said scales, calculating an output feature ($F^o_{k,s}$) for each of the at least one output task (T1,T2) for each of said scales (Ss);
   S50) for each of at least two of the output tasks (T1,T2), combining the output features ($F^o_{k,l}$) for each of the respective output tasks (T1,T2) across the respective scales (s), so as to yield a prediction as a depth map (DM) or a semantic image (SI) for the at least two output tasks (T1,T2).

12. The method according to claim 11, wherein the method further comprises a step (S35):

   S35) based on source task features ($F^i_{k,l}$) for each of the inside tasks calculated on the basis of a backbone feature at a source scale (Ss), calculating a scaled prediction ($SP_{k,1};SP_{k,2},SP_{k,3}$) for each of the inside tasks at a destination scale (Ss+1) different of the source scale; and
   at step S30 the task features ($F^i_{k,l}$) for each of said inside tasks (T1-T4) at the destination scale are calculated based on both a backbone feature (BFs+1) at the destination scale and the scaled predictions ($SP_{k,2};SP_{k,3},SP_{k,4}$) calculated at the destination scale.

13. The method according to claim 12, wherein the destination scale is higher than the source scale.

14. The method according to any one of claims 11 to 13, wherein said inside tasks include at least one inside task (T3,T4) which is not an output task.

15. A computer program comprising instructions which, when the program is executed by a computer, cause the computer to carry out the steps of a method according to any one of claims 11 to 14.

# EP 4 091 104 B1

**16.** A non-transitory computer readable medium having stored thereon a computer program according to claim 15.

**Patentansprüche**

**1.** Dateninterpretationssystem, umfassend ein neuronales Netz (1000), implementiert von einem oder mehreren Rechnern zum Durchführen mindestens einer datenbasierten Ausgabeaufgabe basierend auf Eingangsdaten, die ein in das System eingegebenes Eingangsbild sind, wobei

das neuronale Netz (1000) konfiguriert ist, um Daten der Eingangsdaten (I) zu empfangen;
das neuronale Netz (1000) Folgendes umfasst:

- ein Backbone (B), das in der Lage ist, Darstellungen der Daten in einer Vielzahl von Maßstäben auszugeben;
- eine Vielzahl von Aufgabenvorhersageeinheiten (TPUi), wovon jede in der Lage ist, ein Aufgabenmerkmal für jede aus einer Vielzahl von inneren Aufgaben zu berechnen;
- eine Destillationseinheit (DU); und
- mindestens zwei Merkmalsaggregationseinheiten (FAUi);

das Backbone konfiguriert ist, um basierend auf den Daten ein Backbone-Merkmal für jede Skala der Vielzahl der Skalen (Si) zu berechnen;
die Aufgabenvorhersageeinheiten (TPUs) jeweils für jede Skala (Ss) der Skalen basierend auf mindestens dem Backbone-Merkmal (BFs) in der Skala (Ss) konfiguriert sind, um ein Aufgabenmerkmal ($F^i_{k,s}$) für jede der inneren Aufgaben (Tk) zu berechnen;
die Destillationseinheit (DU) konfiguriert ist, um basierend auf den Aufgabenmerkmalen ($F^i_{k,s}$) für jede der inneren Aufgaben und für jede Skala (Ss) der Skalen ein Ausgangsmerkmal ($F^o_{k,s}$) für jede der mindestens einen Ausgangsaufgabe (T1, T2) für jede der Skalen zu berechnen; und
die mindestens zwei Merkmalsaggregationseinheiten konfiguriert sind, um für jede der mindestens einen Ausgangsaufgabe (T1, T2) die für die Ausgangsaufgabe berechneten Ausgangsmerkmale ($F^o_{k,s}$) über die jeweiligen Skalen (Ss) zu kombinieren, um eine Vorhersage als Tiefenkarte (DM) oder semantisches Bild (SI) für die Ausgangsaufgabe (T1, T2) zu ergeben.

**2.** Dateninterpretationssystem nach Anspruch 1, ferner umfassend mindestens eine Merkmalspropagationsseinheit (FPU1, FPU2, FPU3), wobei

die mindestens eine Merkmalspropagationseinheit konfiguriert ist, um Quellenaufgabenmerkmale ($F^i_{k,s}$) für jede der inneren Aufgaben einzugeben, die von einer Quellenaufgabenvorhersageeinheit (TPU1, TPU2, TPU3) berechnet werden, und darauf basierend skalierte Vorhersagen ($SP_{k,2}; SP_{k,3}, SP_{k,4}$) für jede der inneren Aufgaben mit einer Zielskala (Ss+1) zu berechnen; und
eine Zielaufgabenvorhersageeinheit (TPU2, TPU3, TPU4), die von der Quellenaufgabenvorhersageeinheit verschieden ist, konfiguriert ist, um das Aufgabenmerkmal ($F^i_{k,s+1}$) für jede der inneren Aufgaben (Tk) auf der Zielskala (Ss+1) zu berechnen, um das Backbone-Merkmal (BFs) für die Zielskala und die auf der Zielskala berechneten skalierten Vorhersagen ($SP_{k,2}; SP_{k,3}, SP_{k,4}$) einzugeben.

**3.** Dateninterpretationssystem nach Anspruch 2, wobei für jede der mindestens einen Merkmalsausbreitungseinheit die Skala der skalierten Vorhersage (SP1, SP2, SP3) höher ist als die Skala des Backbone-Merkmals (BF1, BF2, BF3), das von der Quellenaufgabenvorhersageeinheit (TPU1, TPU2, TPU3) zum Berechnen des Quellenaufgabenmerkmals ($F^i_{k,s}$) verwendet wird,

**4.** Dateninterpretationssystem nach einem der Ansprüche 1 bis 3, wobei mindestens eine für jede der mindestens einen Merkmalsausbreitungseinheit (FPUi) einen kanalabhängigen Mechanismus, beispielsweise ein Squeeze-and-Excitation-Modul (SEM), umfasst.

**5.** Dateninterpretationssystem nach einem der Ansprüche 1 bis 4, wobei das Datum ein mehrdimensionales Datum der Dimension mindestens 2 ist und ein Skalierungsvorgang ein Vorgang ist, der die Anzahl von Datenpunkten auf mindestens einer Dimension mit einem nicht einheitlichen Skalierungsfaktor (S) multipliziert.

**6.** Dateninterpretationssystem nach einem der Ansprüche 1 bis 5, wobei die inneren Aufgaben mindestens eine innere Aufgabe (T3, T4) beinhalten, die keine Ausgabeaufgabe ist.

7. Dateninterpretationssystem nach einem der Ansprüche 1 bis 6, wobei das Backbone (B) ein neuronales HRNet-Netz oder ein neuronales FPN-Netz ist, das insbesondere auf einem ResNet aufbaut.

8. Dateninterpretationssystem nach einem der Ansprüche 1 bis 7, wobei mindestens eine innere Aufgabe eine Aufgabe ist, die keine Ausgabeaufgabe ist und die darin besteht, Ausgabedaten zu erlangen, die durch Berechnung basierend auf dem Resultat einer oder mehrerer Ausgabeaufgaben erlangt werden können.

9. Dateninterpretationssystem nach einem der Ansprüche 1 bis 8, wobei eine oder mehrere der inneren und Ausgabeaufgaben eine dichte Vorhersageaufgabe ist.

10. Fahrzeug, umfassend ein Dateninterpretationssystem nach einem der Ansprüche 1 bis 9.

11. Verfahren zum Interpretieren von Eingangsdaten, um mindestens eine datenbasierte Ausgabeaufgabe durchzuführen, das Verfahren umfassend:

S10) Empfang eines Bezugspunkts von Eingangsdaten (I), die ein Eingangsbild sind;
S20) basierend auf dem Bezugspunkt, Berechnen eines Backbone-Merkmals (BFi) für jede Skala einer Vielzahl von Skalen (Si) von Darstellungen des Bezugspunkts;
S30) für jede Skala (Ss) der genannten Skalen:

zumindest basierend auf dem Backbone-Merkmal (BFs) auf der Skala (Ss), Berechnen eines Aufgabenmerkmals ($F^i_{k,s}$) für jede der inneren Aufgaben (T1-T4);
S40) basierend auf den Aufgabenmerkmalen ($F^i_{k,s}$) für jede der inneren Aufgaben (T1-T4) und für jede Skala (Ss) der Skalen, Berechnen eines Ausgangsmerkmals ($F^o_{k,s}$) für jede der mindestens einen Ausgangsaufgabe (T1, T2) für jede der Skalen (Ss);
S50) für jede von mindestens zwei der Ausgabeaufgaben (T1, T2), wobei die Ausgabemerkmale ($F^o_{k,s}$) für Kombinieren der jeweiligen Ausgabeaufgaben (T1, T2) über die jeweiligen Skalen (s), um eine Vorhersage als Tiefenkarte (DM) oder ein semantisches Bild (SI) für die mindestens zwei Ausgabeaufgaben (T1, T2) zu ergeben.

12. Verfahren nach Anspruch 11, wobei das Verfahren ferner einen Schritt (S35) umfasst:

S35) basierend auf Quellenaufgabenmerkmalen ($F^i_{k,s}$) für jede der inneren Aufgaben, die basierend auf einem Backbone-Merkmal auf einer Quellenskala (Ss) berechnet werden, Berechnen einer skalierten Vorhersage ($SP_{k,1};SP_{k,2},SP_{k,3}$) für jede der inneren Aufgaben auf einer von der Quellenskala verschiedenen Zielskala (Ss+1); und
wobei in Schritt S30 die Aufgabenmerkmale ($F^i_{k,s}$) für jede der inneren Aufgaben (T1-T4) auf der Zielskala basierend auf sowohl einem Backbone-Merkmal (BFs+1) auf der Zielskala als auch der auf der Zielskala berechneten skalierten Vorhersagen ($SP_{k,2};SP_{k,3},SP_{k,4}$) berechnet werden.

13. Verfahren nach Anspruch 12, wobei der Zielmaßstab höher ist als der Quellenmaßstab.

14. Verfahren nach einem der Ansprüche 11 bis 13, wobei die inneren Aufgaben mindestens eine interne Aufgabe (T3, T4) beinhalten, die keine Ausgabeaufgabe ist.

15. Rechnerprogramm, umfassend Anweisungen, die, wenn das Programm von einem Rechner ausgeführt wird, den Rechner veranlassen, die Schritte eines Verfahrens nach einem der Ansprüche 11 bis 14 durchzuführen.

16. Nicht-transitorisches rechnerlesbares Medium, auf dem ein Rechnerprogramm nach Anspruch 15 gespeichert ist.

**Revendications**

1. Système d'interprétation de données comprenant un réseau de neurones (1000) mis en œuvre par un ou plusieurs ordinateurs pour effectuer au moins une tâche de sortie basée sur des données sur la base de données d'entrée qui sont une image d'entrée introduite dans le système, dans lequel

le réseau de neurones (1000) est configuré pour recevoir une donnée des données d'entrée (I) ;
le réseau de neurones (1000) comprend :

- un réseau fédérateur (B) capable de fournir en sortie des représentations de la donnée à une pluralité d'échelles ;
- une pluralité d'unités de prédiction de tâches (TPUi), chacune étant capable de calculer une caractéristique de tâche pour chacune d'une pluralité de tâches internes ;
- une unité de distillation (DU) ; et
- au moins deux unités d'agrégation de caractéristiques (FAUi) ;

le réseau fédérateur est configuré, sur la base de ladite donnée, pour calculer une caractéristique de réseau fédérateur pour chaque échelle parmi la pluralité d'échelles (Si) ;
les unités de prédiction de tâches (TPU) sont configurées respectivement, pour chaque échelle (Ss) parmi lesdites échelles, sur la base au moins de la caractéristique de réseau fédérateur (BFs) à ladite échelle (Ss), pour calculer une caractéristique de tâche ($F^i_{k,s}$) pour chacune desdites tâches internes (Tk) ;
l'unité de distillation (DU) est configurée, sur la base des caractéristiques de tâche ($F^i_{k,s}$) pour chacune desdites tâches internes et pour chaque échelle (Ss) parmi lesdites échelles, pour calculer une caractéristique de sortie ($F^o_{k,s}$) pour chacune de l'au moins une tâche de sortie (T1, T2) pour chacune desdites échelles ; et
lesdites au moins deux unités d'agrégation de caractéristiques sont configurées, pour chacune de l'au moins une tâche de sortie (T1, T2), pour combiner les caractéristiques de sortie ($F^o_{k,s}$) calculées pour la tâche de sortie à travers les échelles respectives (Ss) de manière à produire une prédiction sous la forme d'une carte de profondeur (DM) ou d'une image sémantique (SI) pour la tâche de sortie (T1, T2).

2. Système d'interprétation de données selon la revendication 1, comprenant en outre au moins une unité de propagation de caractéristiques (FPU1, FPU2, FPU3) ; dans lequel

ladite au moins une unité de propagation de caractéristiques est configurée pour appliquer en entrée des caractéristiques de tâche source ($F^i_{k,s}$) pour chacune des tâches internes calculées par une unité de prédiction de tâche source (TPU1, TPU2, TPU3), et sur cette base, pour calculer des prédictions mises à l'échelle ($SP_{k,2}$ ; $SP_{k,3}$, $SP_{k,4}$) pour chacune des tâches internes, à une échelle de destination (Ss+1) ; et
une unité de prédiction de tâche de destination (TPU2, TPU3, TPU4) distincte de l'unité de prédiction de tâche source est configurée, afin de calculer la caractéristique de tâche ($F^i_{k,s+1}$) pour chacune desdites tâches internes (Tk) à l'échelle de destination (Ss+1), pour appliquer en entrée la caractéristique de réseau fédérateur (BFs) pour l'échelle de destination et les prédictions mises à l'échelle ($SP_{k,2}$ ; $SP_{k,3}$, $SP_{k,4}$) calculées à l'échelle de destination.

3. Système d'interprétation de données selon la revendication 2, dans lequel, pour chacune de ladite au moins une unité de propagation de caractéristiques, l'échelle de la prédiction mise à l'échelle (SP1, SP2, SP3) est supérieure à l'échelle de la caractéristique de réseau fédérateur (BF1, BF2, BF3) utilisée par l'unité de prédiction de tâche source (TPU1, TPU2, TPU3) pour calculer la caractéristique de tâche source ($F^i_{k,s}$).

4. Système d'interprétation de données selon l'une quelconque des revendications 1 à 3, dans lequel au moins une pour chacune de ladite au moins une unité de propagation de caractéristiques (FPUi) comprend un mécanisme de déclenchement de canal, par exemple un module de compression et d'excitation (SEM).

5. Système d'interprétation de données selon l'une quelconque des revendications 1 à 4, dans lequel la donnée est une donnée multidimensionnelle d'une dimension 2 au moins, et une opération de mise à l'échelle est une opération de multiplication du nombre de points de données sur au moins une dimension par un facteur d'échelle non unitaire (S).

6. Système d'interprétation de données selon l'une quelconque des revendications 1 à 5, dans lequel lesdites tâches internes comprennent au moins une tâche interne (T3, T4) qui n'est pas une tâche de sortie.

7. Système d'interprétation de données selon l'une quelconque des revendications 1 à 6, dans lequel le réseau fédérateur (B) est un réseau de neurones HRNet, ou un réseau de neurones FPN, en particulier construit sur un réseau ResNet.

8. Système d'interprétation de données selon l'une quelconque des revendications 1 à 7, dans lequel au moins une tâche interne est une tâche qui n'est pas une tâche de sortie et qui consiste à obtenir une donnée de sortie qui peut être obtenue par calcul sur la base du résultat d'une ou plusieurs tâches de sortie.

9. Système d'interprétation de données selon l'une quelconque des revendications 1 à 8, dans lequel une ou plusieurs des tâches internes et des tâches de sortie sont une tâche de prédiction dense.

10. Véhicule, comprenant un système d'interprétation de données selon l'une quelconque des revendications 1 à 9.

11. Procédé d'interprétation de données d'entrée afin d'effectuer au moins une tâche de sortie basée sur des données, le procédé comprenant le fait de :

   S10) recevoir une donnée de données d'entrée (I) qui est une image d'entrée ;
   S20) sur la base de ladite donnée, calculer une caractéristique de réseau fédérateur (BFi) pour chaque échelle parmi une pluralité d'échelles (Si) de représentations de la donnée ;
   S30) pour chaque échelle (Ss) parmi lesdites échelles :

   sur la base au moins de la caractéristique de réseau fédérateur (BFs) à ladite échelle (Ss), calculer une caractéristique de tâche ($F^i_{k,s}$) pour chacune desdites tâches internes (T1-T4) ;
   S40) sur la base des caractéristiques de tâche ($F^i_{k,s}$) pour chacune desdites tâches internes (T1-T4) et pour chaque échelle (Ss) parmi lesdites échelles, calculer une caractéristique de sortie ($F^o_{k,s}$) pour chacune de l'au moins une tâche de sortie (T1, T2) pour chacune desdites échelles (Ss) ;
   S50) pour chacune d'au moins deux tâches de sortie (T1, T2), combiner les caractéristiques de sortie ($F^o_{k,s}$) pour chacune des tâches de sortie respectives (T1, T2) à travers les échelles respectives (s), de manière à produire une prédiction sous la forme d'une carte de profondeur (DM) ou d'une image sémantique (SI) pour les au moins deux tâches de sortie (T1, T2).

12. Procédé selon la revendication 11, dans lequel le procédé comprend en outre une étape (S35) comprenant le fait de :

   S35) sur la base de caractéristiques de tâche source ($F^i_{k,s}$) pour chacune des tâches internes calculées sur la base d'une caractéristique de réseau fédérateur à une échelle source (Ss), calculer une prédiction mise à l'échelle ($SP_{k,1}$ ; $SP_{k,2}$, $SP_{k,3}$) pour chacune des tâches internes à une échelle de destination (Ss+1) différente de l'échelle source ; et
   à l'étape S30, les caractéristiques de tâche ($F^i_{k,s}$) pour chacune desdites tâches internes (T1-T4) à l'échelle de destination sont calculées sur la base, à la fois, d'une caractéristique de réseau fédérateur (BFs+1) à l'échelle de destination et des prédictions mises à l'échelle ($SP_{k,2}$ ; $SP_{k,3}$, $SP_{k,4}$) calculées à l'échelle de destination.

13. Procédé selon la revendication 12, dans lequel l'échelle de destination est supérieure à l'échelle source.

14. Procédé selon l'une quelconque des revendications 11 à 13, dans lequel lesdites tâches internes comprennent au moins une tâche interne (T3, T4) qui n'est pas une tâche de sortie.

15. Programme informatique comprenant des instructions qui, lorsque le programme est exécuté par un ordinateur, amènent l'ordinateur à mettre en œuvre les étapes d'un procédé selon l'une quelconque des revendications 11 à 14.

16. Support non transitoire lisible par ordinateur sur lequel est stocké un programme informatique selon la revendication 15.

# FIG.1

FIG.2

FIG.3

FIG.4

EP 4 091 104 B1

S10) Receive a datum of input data (an image I)

I

S20) Calculate backbone features

SP$_{k,2}$  SP$_{k,3}$  SP$_{k,4}$

BF1  BF2  BF3  BF4

S1  
S30) Calculate task features

S2  
S30) Calculate task features

S3  
S30) Calculate task features

S4  
S30) Calculate task features

F$_{k,1}^i$  F$_{k,2}^i$  F$_{k,3}^i$  F$_{k,4}^i$

S35) Calculate scaled predictions

S35) Calculate scaled predictions

S35) Calculate scaled predictions

S40) Calculate output features

F$_{1,s}^0$  F$_{2,s}^0$

T1  S50) Combine output features

T2  S50) Combine output features

DM

SI

FIG.5

EP 4 091 104 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019057507 A, El-Khamy Mostafa

**Non-patent literature cited in the description**

- **K.-K. MANINIS** ; **I. RADOSAVOVIC** ; **I. KOKKINOS**. Attentive single-tasking of multiple tasks. *IEEE Conference on Computer Vision and Pattern Recognition (CVPR)*, 2019
- **D. XU** ; **W. OUYANG** ; **X. WANG** ; **N. SEBE**. PAD-Net: Multi-tasks guided prediction-and-distillation network for simultaneous depth estimation and scene parsing. *IEEE Conference on Computer Vision and Pattern Recognition (CVPR)*, 2018
- **Z. ZHANG** ; **Z. CUI** ; **C. XU** ; **Z. JIE** ; **X. LI** ; **J. YANG**. Joint task-recursive learning for semantic segmentation and depth estimation. *Springer European Conference on Computer Vision (ECCV)*, 2018
- **Z. ZHANG** ; **Z. CUI** ; **C. XU** ; **Y. YAN** ; **N. SEBE** ; **J. YANG**. Pattern-affinitive propagation across depth, surface normal and semantic segmentation. *IEEE Conference on Computer Vision and Pattern Recognition (CVPR)*, 2019
- **TSUN-YI LIN** ; **PIOTR DOLL** ; **ROSS GIRSHICK** ; **KAIMING HE** ; **BHARATH HARIHARAN** ; **SERGE BELONGIE**. Feature pyramid networks for object detection. *CVPR*, 2017, 2117-2125
- **KE SUN** ; **BIN XIAO** ; **DONG LIU** ; **JINGDONG WANG**. Deep high-resolution representation learning for human pose estimation. *CVPR*, 2019, 5693-5703

- **DAN XU** ; **WANLI OUYANG** ; **XIAOGANG WANG** ; **NICU SEBE**. Pad-net: Multi-tasks guided prediction-and-distillation network for simultaneous depth estimation and scene parsing. *CVPR*, 2018, 675-684
- **ZHENYU ZHANG** ; **ZHEN CUI** ; **CHUNYAN XU** ; **YAN YAN** ; **NICU SEBE** ; **JIAN YANG**. Pattern-affinitive propagation across depth, surface normal and semantic segmentation. *CVPR*, 2019, 4106-4115
- **JIE HU** ; **LI SHEN** ; **GANG SUN**. Squeeze-and-excitation networks. *CVPR*, 2018, 7132-7141
- **ALEXANDER KIRILLOV** ; **ROSS GIRSHICK** ; **KAIMING HE** ; **PIOTR DOLL**. Panoptic feature pyramid networks. *CVPR*, 2019, 6399-6408
- **KAIMING HE** ; **XIANGYU ZHANG** ; **SHAOQING REN** ; **JIAN SUN**. Deep residual learning for image recognition. *CVPR*, 2016, 770-778
- **ZHENYU ZHANG** ; **ZHEN CUI** ; **CHUNYAN XU** ; **ZEQUN JIE** ; **XIANG LI** ; **JIAN YANG**. Joint task-recursive learning for semantic segmentation and depth estimation. *ECCV*, 2018, 235-251